# EUROPEAN PATENT SPECIFICATION

(11) **EP 2 369 261 B1**
(45) Date of publication and mention of the grant of the patent: **18.01.2017**
(21) Application number: 11159464.4
(22) Date of filing: 23.03.2011
(51) Int. Cl.: F24J 2/34, F24J 2/30, F24J 2/44

(54) **Solar-energy system for heating sanitary water**
Sonnenenergiesystem zum Aufwärmen von Sanitärwasser
Système d'énergie solaire pour chauffer l'eau sanitaire

(30) Priority: 23.03.2010 IT BO20100183
(43) Date of publication of application: 28.09.2011
(73) Proprietor: Riello S.p.A., Legnago (IT)
(72) Inventor: Tessaro, Luca, 35010 Loreggia (IT); Miorin, Fabrizio, 30030 Martellago (IT); Perer, Umberto, 31030 Arcade (IT)
(74) Representative: Bergadano, Mirko

(56) References cited:
- EP-A1- 0 696 713
- WO-A1-98/04874
- DE-A1- 4 429 838
- FR-A1- 2 710 970
- US-A- 4 505 261
- US-A- 4 517 959
- US-A- 4 622 951
- US-A1- 2001 054 419

## Description

The present invention relates to a solar-energy system for heating sanitary water.

In particular, the present invention regards a solar-energy system of the type comprising a solar collector for heating a thermal-vector fluid, and a heat exchanger traversed by the thermal-vector fluid and by sanitary water to be heated.

It is known from us 4,505,261 and US 4,517,959 that in a solar-energy system of the type described above the exchanger is defined by a tank of a cylindrical shape of considerable dimensions arranged side by side to the solar collector and such as to be able to accumulate an amount of sanitary water sufficient to supply the domestic water-using appliances and fixtures.

A system of the type described above presents the disadvantage that the considerable dimensions and the cylindrical shape of the tank generate a localized load on the roof such as to possibly damage the roof itself. Moreover, the dimensions and shape of the tank cause a marked resistance to wind and accumulation of snow, with the consequent risk of damage both to the roof and to the solar-energy system.

DE 44,29,838 and FR 2,710,970 disclose embodiments of solar-energy system where the tank is arranged beneath the solar collector. However this solution does not solve the problem of the localized load on the roof and the entire solar-energy system causes a marked resistance to wind and accumulation of snow.

The aim of the present invention is to provide a solar-energy system for heating sanitary water that will enable the drawbacks described above to be overcome.

According to the present invention a solar-energy system for heating sanitary water is provided as specified in Claim 1 and, preferably, in any one of the subsequent claims that depend directly or indirectly upon Claim 1.

The invention will now be described with reference to the annexed drawings, which illustrate non-limiting examples of embodiment thereof, and in which:
- Figure 1 is a perspective view of a preferred embodiment of the solar-energy system according to the present invention;
- Figure 2 is an exploded view of a first embodiment of the solar-energy system according to the present invention;
- Figure 3 is a cross section, at an enlarged scale, according to the line III-III of a detail of Figure 2;
- Figure 4 is an exploded view of a second embodiment of the solar-energy system according to the present invention;
- Figure 5 is a cross section, at an enlarged scale, according to the line V-V of a detail of Figure 4;
- Figure 6 is an exploded view of a third embodiment of the solar-energy system according to the present invention; and
- Figure 7 illustrates, at an enlarged scale, a detail of Figure 6.

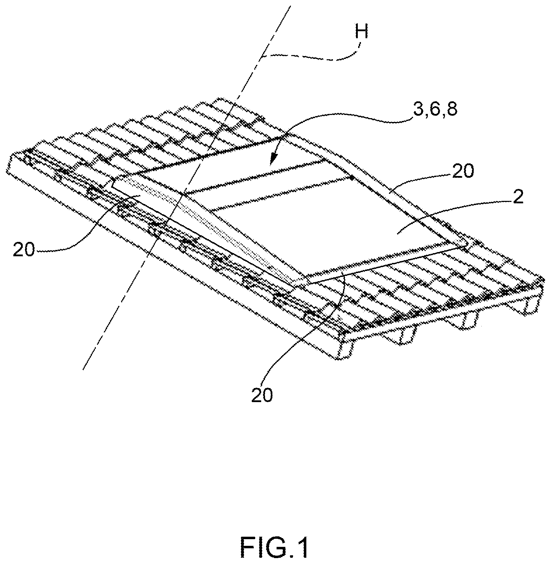

In Figure 1, designated as a whole by 1 is a solar-energy system for heating sanitary water comprising a solar collector 2 for heating a thermal-vector fluid, a heat exchanger 3 for heating sanitary water, a circuit 4 for supply of sanitary water to the exchanger 3, and a circuit 5 for circulation of the thermal-vector fluid, which is of a known type and comprises, for example, a mixture of water and glycol.

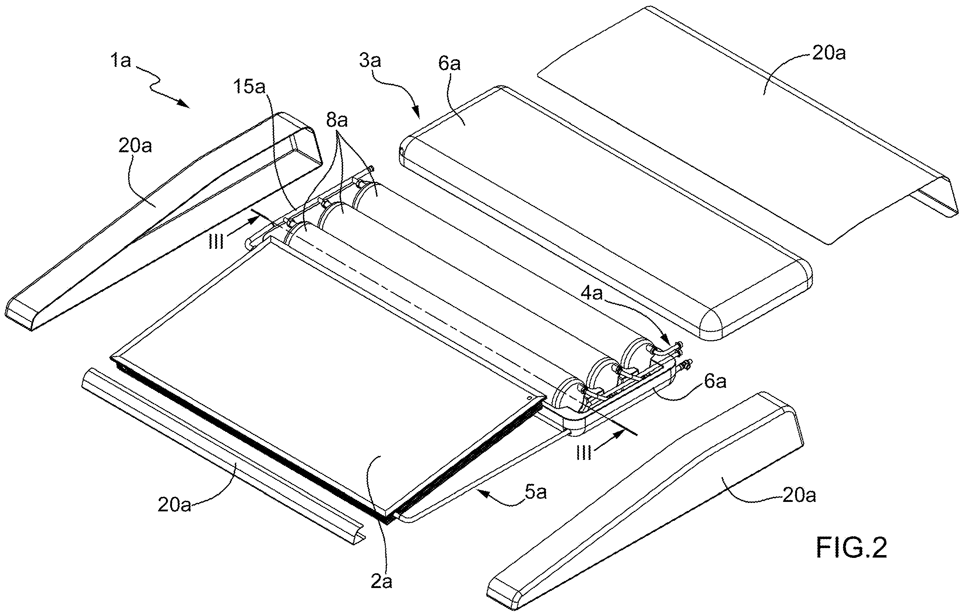

According to what is illustrated in Figures 2, 4, and 6, the exchanger 3 comprises a box-like body 6 having a plurality of housings 7, which receive respective accumulation units 8 fluidically connected to one another, as will be explained more fully hereinafter. The accumulation units 8 are three in number. The box-like body 6 has a pair of plane side surfaces of larger dimensions, one in contact with a resting surface and the opposed one delimiting at the top the maximum encumbrance of the exchanger 3.

The accumulation units 8 have along an axis H, perpendicular to the resting surface of the roof, an encumbrance that is less than the maximum encumbrance of the collector 2 along the axis H itself.

According to what is illustrated in Figure 1, the box-like body 6 has an encumbrance along the axis H equivalent to the maximum encumbrance of the collector 2 along the axis H itself.

The circuit 4 for supply of sanitary water and the circuit 5 for supply of thermal-vector fluid are set in countercurrent.

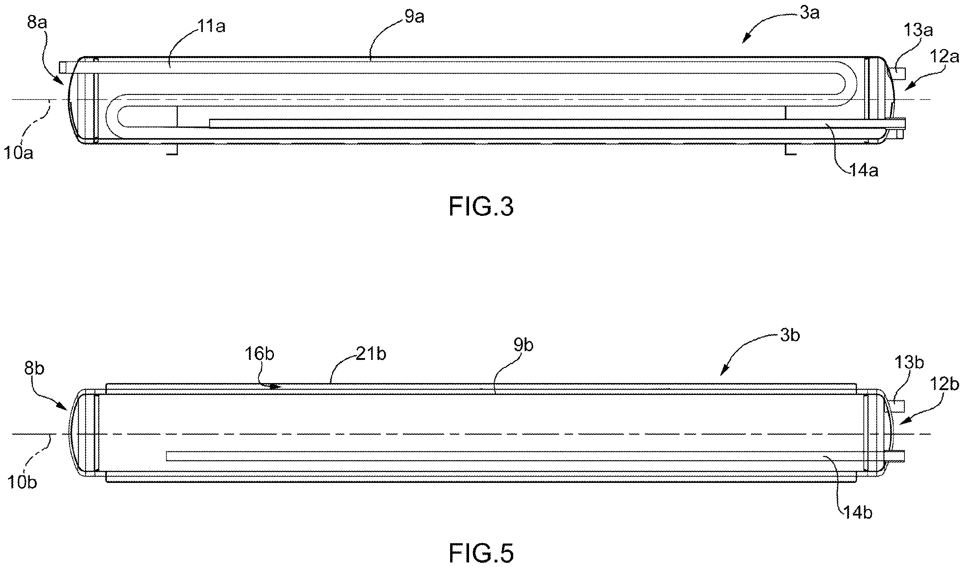

According to the first embodiment of the solar-energy system 1 illustrated in Figures 2 and 3, each accumulation unit 8a is defined by a hollow body 9a, which has a longitudinal axis 10a, and comprises a coil 11a for passage of the thermal-vector fluid, and a system for circulation 12a of the sanitary water. The coil 11a is set, at least partially, inside the body 9a.

The circulation system 12a comprises an inlet pipe 14a and an outlet pipe 13a for the sanitary water, which pass through one and the same wall of the accumulation unit 8a. The inlet pipe 14a has a length such as to prevent mixing between the water entering and the water leaving the accumulation unit 8a; in particular, the inlet pipe 14a extends along the axis 10a for a stretch greater than half the length of the body 9a.

It may be noted that the circuit 5a for the thermal-vector fluid comprises a delivery pipe 15a, which is set at output from the collector 2a for supply of the hot thermal-vector fluid to the exchanger 3a. The coils 11a of a pair of adjacent accumulation units 8a are connected in parallel to the external duct 15a. The circulation systems 12a of a pair of adjacent accumulation units 8a are connected in series to one another.

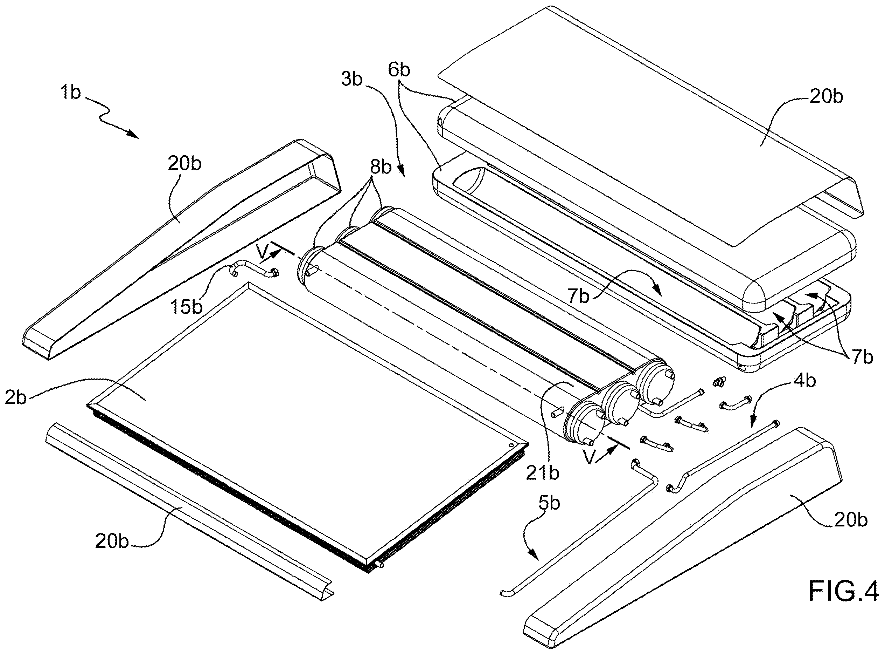

In the second embodiment illustrated in Figures 4 and 5, each accumulation unit 8b is defined by a hollow body 9b, which has a longitudinal axis 10b, and comprises a system for circulation 12b of the sanitary water.

The circulation system 12b comprises an inlet pipe 14b and an outlet pipe 13b for the sanitary water, which pass through one and the same wall of the accumulation unit 8b. The inlet pipe 13b has a length such as to prevent mixing between the water entering and the water leaving the accumulation unit 8b; in particular, the inlet pipe 14b extends along the axis 10b for a stretch greater than half the length of the hollow body 9b. The circulation systems 12b of a pair of adjacent accumulation units 8b are connected in series.

The circuit 5b for the thermal-vector fluid comprises a delivery pipe 15b that is set at output from the collector 2b for supply of the hot thermal-vector fluid to the exchanger 3b.

The exchanger 3b comprises a coating 21b, which is set around each accumulation unit 8b, and is traversed inside by the thermal-vector fluid. The coating 21b delimits around each accumulation unit 8b a chamber 16b traversed by the thermal-vector fluid.

According to what is illustrated in Figure 4, the coating 21b houses the accumulation units 8b, and the thermal-vector fluid flows within a chamber 16b (Figure 5) delimited, on the outside, by the coating 21b and, on the inside, by the bodies 9b of the accumulation units 8b.

The distance between the coating 21b and each body 9b is such as to produce a laminar motion of the thermal-vector fluid throughout the longitudinal extension of each accumulation unit 8b.

Both the first embodiment and the second embodiment regard a natural-circulation solar-energy system 1a (1b), in which the motion of the thermal-vector fluid and of the sanitary water is produced by the convective motion generated by solar heat.

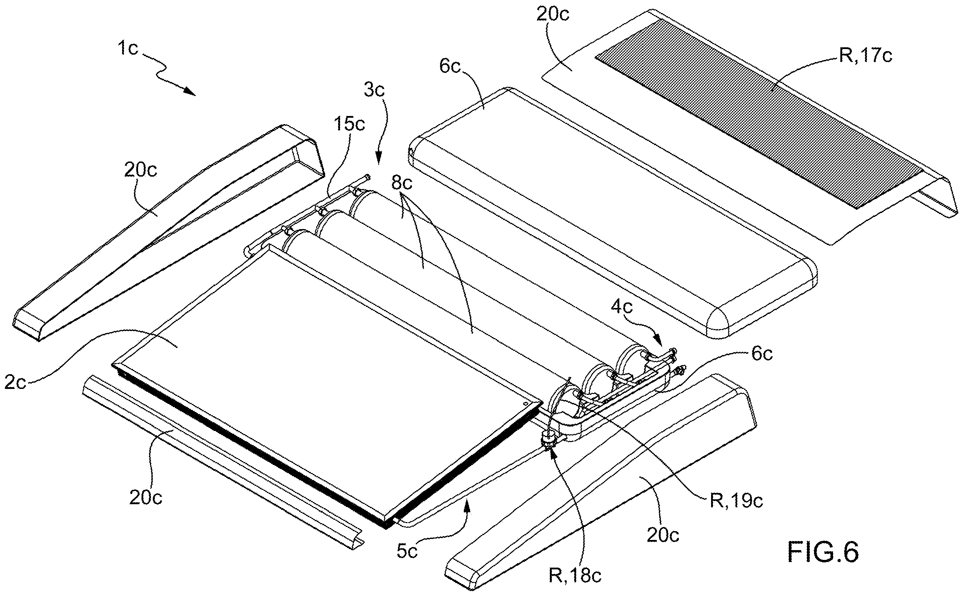

According to the third embodiment, illustrated in Figure 6, the solar-energy system 1c comprises a recirculation unit R, in turn comprising a photovoltaic device 17c and an electrical circulator 18c supplied by the photovoltaic device 17c itself. Preferably, the photovoltaic device 17c comprises a solar panel.

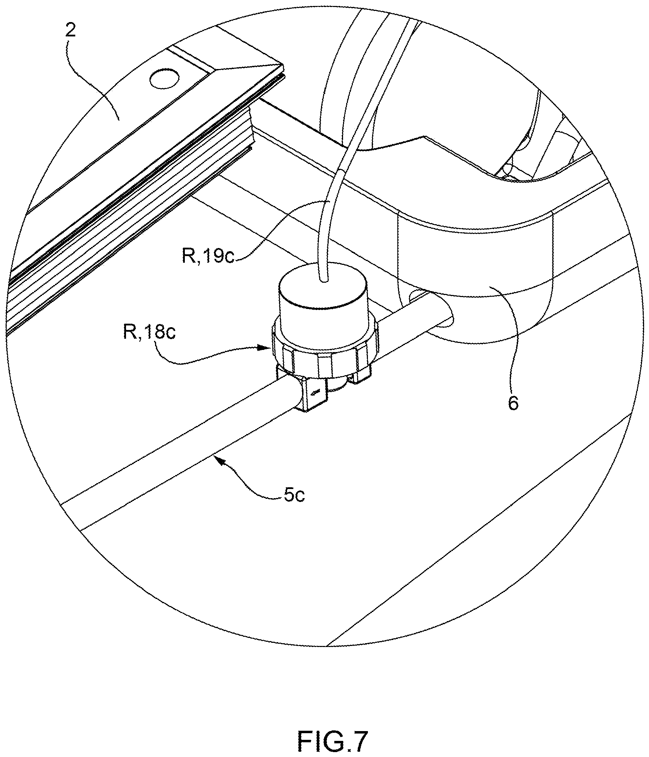

According to what is illustrated in Figure 7, the circulator 18c comprises a cable 19c for electrical connection to the photovoltaic device 17c and is arranged so as to regulate the flow within the circuit 5c for circulation of the thermal-vector fluid.

According to the third embodiment illustrated in Figure 6, the solar-energy system 1c comprises an exchanger 3c similar to the one illustrated in Figures 2 and 3 for the first embodiment.

According to a further embodiment (not illustrated) the solar-energy system 1 comprises an exchanger 3 of the type illustrated in Figures 4 and 5 for the second embodiment and further comprises a recirculation unit R.

According to a further variant, not illustrated, the circulator 18 is arranged so as to regulate the flow within the water-supply circuit 4.

According to what is illustrated in Figures 1, 2, 4 and 6, the solar-energy system 1, finally comprises a plurality of protection walls 20, which are designed to enclose the ensemble formed by the collector 2, the exchanger 3, the circuit 4 for supply of sanitary water, and the circuit 5 for supply of thermal-vector fluid.

In use, the heat developed by solar radiation in the collector 2 causes circulation of the thermal-vector fluid through the circuit 5.

The hot thermal-vector fluid is sent to the exchanger 3, in which it is used for heating the sanitary water. According to what is illustrated in Figures 2, 4, and 6, the thermal-vector fluid progressively heats the accumulation units 8 traversing the exchanger 3 from an accumulation unit 8 at a lower temperature to an accumulation unit 8 at a higher temperature.

From what has been set forth above it follows that the solar-energy system 1 according to the present invention has a reduced encumbrance albeit guaranteeing an amount of heated water sufficient for supply of domestic water-using appliances and fixtures.

In addition, the reduced dimensions of each accumulation unit 8 contained within the box-like body 6 bestow on the exchanger 3 of the solar-energy system 1 a flattened shape. The solar-energy system 1 extends, once mounted, substantially parallel to the roof (Figure 1) reducing the encumbrance and preventing any damage due to the accumulation of snow or else to wind. Finally, the box-like body 6 with a plane and extensive resting wall and the plurality of accumulation units 8 set alongside one another enables redistribution of the load of the solar-energy system 1 over a wider area of the roof, thus considerably reducing the risks of damage thereto.

## Claims

1. A solar-energy system for heating sanitary water, comprising
a solar collector (2) for heating a thermal-vector fluid, a heat exchanger (3) for heating sanitary water and arranged side by side with the solar collector (2), a circuit (4) for supply of sanitary water to the heat exchanger (3), and a circuit (5) for supply of thermal-vector fluid, which is pre-arranged for exchanging heat both with the collector (2) and with the exchanger (3); wherein the heat exchanger (3) comprises a plurality of accumulation units (8) fluidically connected with circuit (4) for supply of sanitary water; and wherein the encumbrance of each accumulation unit (8) along an axis (H) perpendicular to a resting base of the solar-energy system (1) is less than the maximum encumbrance of the collector (2) along said axis (H).

2. The solar-energy system according to Claim 1, wherein each accumulation unit (8) comprises a hollow body (9) and a system for circulation (12) of the sanitary water; wherein the system for circulation (12) of the sanitary water comprises an inlet pipe (14) that gives out into the body (9) and an outlet pipe (13); wherein the inlet pipe (14) and the outlet pipe (13) pass through one and the same wall of the hollow body (9); and wherein the body (9) has a longitudinal axis (10), and the inlet pipe (14) extends within the body (9) for a stretch greater than half the longitudinal extension of said body (9).

3. The solar-energy system according to Claim 2, wherein the systems for circulation (12) of the sanitary water of a pair of adjacent accumulation units (8) are connected in series.

4. The solar-energy system according to one or more of the preceding claims, wherein the exchanger (3) comprises a box- like body (6), housed in which are the accumulation units (8).

5. The solar-energy system according to any one of the preceding claims, wherein the circuit (5a; 5c) for supply of thermal-vector fluid comprises a plurality of heat-exchange elements (11a; 11c), each of which is set at least partially within a hollow body (9a; 9c) of a respective accumulation unit (8a; 8c).

6. The solar-energy system according to Claim 5 and comprising a pipe for delivery (15a; 15c) of the thermal-vector fluid set at output from the collector (2a; 2c); the heat-exchange elements (11a; 11c) of a pair of adjacent accumulation units (8a; 8c) being connected in parallel to the delivery pipe (15a; 15c).

7. The solar-energy system according to any one of Claims 1 to 4, wherein the exchanger (3b) comprises a coating (21b), which is set around each accumulation unit (8b) and delimits around the body (9b) of each accumulation unit (8b) a chamber (16b) traversed by the thermal-vector fluid leaving the collector (2b); the chamber (16b) being designed to exchange heat with each accumulation unit (8b).

8. The solar-energy system according to any one of the preceding claims and comprising a photovoltaic device (17c) and an electrical circulator (18c), which is supplied by said photovoltaic device (17c) and is provided for regulation of the flow of a fluid within a respective circuit (4c; 5c).

## Patentansprüche

1. Ein Sonnenenergiesystem zum Aufwärmen von Sanitärwasser, aufweisend einen Sonnenkollektor (2) zum Aufwärmen einer Flüssigkeit als thermischer Flüssigkeitsträger, einen Wärmetauscher (3) zum Aufwärmen von Sanitärwasser, wobei Wärmetauscher und Solarkollektor (2) nebeneinander angeordnet sind, einen Kreislauf (4) zum Zuführen von Sanitärwasser zu dem Wärmetauscher (3), und einen Kreislauf zum Zuführen von einer Flüssigkeit als thermischer Flüssigkeitsträger, welcher zum Austausch von Wärme sowohl mit dem Kollektor (2) als auch mit dem Wärmetauscher (3) vorher angeordnet ist; wobei der Wärmetauscher (3) eine Vielzahl von Akkumulationseinheiten (8), die in Strömungsverbindung mit dem Kreislauf (4) zum Zuführen von Sanitärwasser sind, aufweist; wobei die Belastung jeder Akkumulationseinheit (8) entlang einer senkrecht auf der Auflagebasis des Sonnenenergiesystems stehenden Achse (H) kleiner als die maximale Belastung des Kollektors (2) entlang dieser Achse (H) ist.

2. Das Sonnenenergiesystem nach Anspruch 1, wobei jede Akkumulationseinheit (8) einen Hohlkörper (9) und ein System (12) zum Zirkulieren von Sanitärwasser aufweist; wobei das System (12) zum Zirkulieren von Sanitärwasser ein Einlassrohr (14), das in den Körper (9) ausgeht, und ein Auslassrohr (13) aufweist; wobei sich das Einlassrohr (14) und das Auslassrohr (13) durch ein und dieselbe Wand des Hohlkörpers (9) erstrecken; und wobei der Körper (9) eine Längsachse (10) hat, und das Einlassrohr (14) sich in dem Körper (9) für eine Strecke größer als die Hälfte der Längsausdehnung dieses Körpers (9) erstreckt.

3. Das Sonnenenergiesystem nach Anspruch 2, wobei die Systeme (12) zum Zirkulieren von Sanitärwasser eines Paars benachbarter Akkumulationseinheiten (8) in Serie geschaltet sind.

4. Das Sonnenenergiesystem nach einem oder mehreren der vorhergehenden Ansprüche, wobei der Wärmetauscher (3) einen kastenförmigen Körper (6) aufweist, in dem die Akkumulationseinheiten (8) angeordnet sind.

5. Das Sonnenenergiesystem nach einem der vorhergehenden Ansprüche, wobei der Kreislauf (5a; 5c) zum Zuführen von einer Flüssigkeit als thermischer Flüssigkeitsträger eine Vielzahl von Wärmetauscherelementen (11a; 11 c) aufweist, von denen jedes wenigstens teilweise in einem Hohlkörper (9a, 9c) einer entsprechenden Akkumulationseinheit (8a; 8c) angeordnet ist:

6. Das Sonnenenergiesystem nach Anspruch 5 und aufweisend ein Rohr zum Zuführen (15a; 15c) einer Flüssigkeit als thermischer Flüssigkeitsträger, das am Auslass des Kollektors (2a; 2c) angeordnet ist; und die Wärmetauscherelemente (11 a; 11 c) des Paars von Akkumulationseinheiten (8a; 8c) mit dem Zuführrohr (15a; 15c) parallel geschaltet sind.

7. Das Sonnenenergiesystem nach einem der Ansprüche 1 bis 4, wobei der Wärmetauscher (3b) eine Beschichtung (21 b) aufweist, die um jede Akkumulationseinheit (8b) angeordnet ist und um den Körper (9b) jeder Akkumulationseinheit (8b) eine Kammer (16b) abgrenzt, die von der Flüssigkeit als thermischer Flüssigkeitsträger durchkreuzt wird; wobei die Kammer (16b) derart ausgebildet ist, dass sie mit der Akkumulationseinheit (8b) Wärme austauscht.

8. Das Sonnenenergiesystem nach einem der vorhergehenden Ansprüche und aufweisend eine photovoltaische Anlage (17c) und einen elektrischen Zirkulator (18c), der von der photovoltaischen Anlage (17c) versorgt wird und zur Regelung des Flusses der Flüssigkeit in einem entsprechenden Kreislauf (4c; 5c) vorgesehen ist.

## Revendications

1. Système à énergie solaire pour chauffer de l'eau sanitaire, comprenant un collecteur solaire (2) pour chauffer un fluide caloporteur, un échangeur de chaleur (3) pour chauffer l'eau sanitaire et agencé côte à côte avec le collecteur solaire (2), un circuit (4) pour amener l'eau sanitaire à l'échangeur de chaleur (3) et un circuit (5) pour l'alimentation du fluide caloporteur, qui est prédisposé pour échanger la chaleur à la fois avec le collecteur (2) et avec l'échangeur (3) ;
dans lequel l'échangeur de chaleur (3) comprend une pluralité d'unités d'accumulation (8) raccordées de manière fluide avec le circuit (4) pour l'alimentation de l'eau sanitaire ; et dans lequel l'encombrement de chaque d'unité d'accumulation (8) le long d'un axe (H) perpendiculaire à une base d'appui du système à énergie solaire (1) est inférieur à l'encombrement maximum du collecteur (2) le long dudit axe (H).

2. Système à énergie solaire selon la revendication 1, dans lequel chaque unité d'accumulation (8) comprend un corps creux (9) et un système pour la circulation (12) de l'eau sanitaire ; dans lequel le système pour la circulation (12) de l'eau sanitaire comprend un tuyau d'entrée (14) qui débouche dans le corps (9) et un tuyau de sortie (13) ; dans lequel le tuyau d'entrée (14) et le tuyau de sortie (13) passent par une seule et même paroi du corps creux (9) ; et dans lequel le corps (9) a un axe longitudinal (10) et le tuyau d'entrée (14) s'étend à l'intérieur du corps (9) pour un étirement supérieur à la moitié de l'extension longitudinale dudit corps (9).

3. Système à énergie solaire selon la revendication 2, dans lequel les systèmes pour la circulation (12) de l'eau sanitaire d'une paire d'unités d'accumulation (8) adjacentes, sont raccordés en série.

4. Système à énergie solaire selon une ou plusieurs des revendications précédentes, dans lequel l'échangeur (3) comprend un corps en forme de boîte (6), à l'intérieur duquel sont logées les unités d'accumulation (8).

5. Système à énergie solaire selon l'une quelconque des revendications précédentes, dans lequel le circuit (5a ; 5c) pour l'alimentation du fluide caloporteur comprend une pluralité d'éléments d'échange de chaleur (11a ; 11c) dont chacun est placé au moins partiellement à l'intérieur d'un corps creux (9a ; 9c) d'une unité d'accumulation (8a ; 8c) respective.

6. Système à énergie solaire selon la revendication 5 et comprenant un tuyau pour la distribution (15a ; 15c) du fluide caloporteur placé à la sortie du collecteur (2a ; 2c) ; les éléments d'échange de chaleur (11a ; 11c) d'une paire d'unités d'accumulation (8a ; 8c) adjacents étant raccordés en parallèle au tuyau de distribution (15a ; 15c).

7. Système à énergie solaire selon l'une quelconque des revendications 1 à 4, dans lequel l'échangeur (3b) comprend un revêtement (21b) qui est placé autour de chaque unité d'accumulation (8b) et délimite, autour du corps (9b) de chaque unité d'accumulation (8b), une chambre (16b) traversée par le fluide caloporteur quittant le collecteur (2b) ; la chambre (16b) étant conçue pour échanger la chaleur avec chaque unité d'accumulation (8b).

8. Système à énergie solaire selon l'une quelconque des revendications précédentes et comprenant un dispositif photovoltaïque (17c) et un circulateur électrique (18c) qui est alimenté par ledit dispositif photovoltaïque (17c) et est prévu pour réguler l'écoulement d'un fluide à l'intérieur d'un circuit (4c ; 5c) respectif.
